Europäisches Patentamt

European Patent Office

Office européen des brevets

(19)

(11) Veröffentlichungsnummer: **0 104 297**

**A1**

(12) # EUROPÄISCHE PATENTANMELDUNG

(21) Anmeldenummer: 82810398.6

(22) Anmeldetag: 24.09.82

(51) Int. Cl.³: **F 03 D 3/06**

(43) Veröffentlichungstag der Anmeldung:
04.04.84  Patentblatt  84/14

(84) Benannte Vertragsstaaten:
AT BE CH DE FR GB IT LI LU NL SE

(71) Anmelder: Hintermann, Fritz
Willikonstrasse 26
Oetwil am See(CH)

(72) Erfinder: Hintermann, Fritz
Willikonstrasse 26
Oetwil am See(CH)

(54) **Umwandlung von Wind in Antriebsenergie.**

(57) Der Wind tritt durch die Vorderseite in das Gehäuse ein, drückt dort auf die ihm entgegengestellten Lamellen, die in Vertikallage mit dem Antriebsrad um 180° vorwärts bewegt werden. Nun beginnt die Rückwärtsbewegung, die die Lamellen im strömungsgünstigen Winkel um den unbeweglichen Abdeckteil herum führt.

FIGUR 2

## Umwandlung von Wind in Antriebsenergie

Der Erfindung liegt insbesondere die Aufgabe zugrunde, ein Verfahren zur Ausnutzung des Windes in Antriebsenergie zu schaffen.

Die Anlage sollte so montiert werden, dass der einblasende Wind stets von vorne in das Gehäuse eintritt, und so den rotierenden Teil dreht. Die Grösse der Anlage richtet sich je nach Bedürfnissen. Das Lamellenrad kann mit nur zwei, aber auch mit mehreren Lamellen ausgerüstet werden. Die dem Windstrom ausgesetzten Lamellen können ihre horizontale Lage, so lange nötig, durch exzentrische Führung oder mittels Federn aufrecht erhalten.

Beschreibung der Anlage

Sie besteht aus den Teilen:

1   Gehäuse

2   Unbeweglicher Abdeckteil

3   Lamellenrad mit Lamellen

4   Führungsrädchen

5   Lamellenführung

6   Antriebsachse

0104297

- 3 -

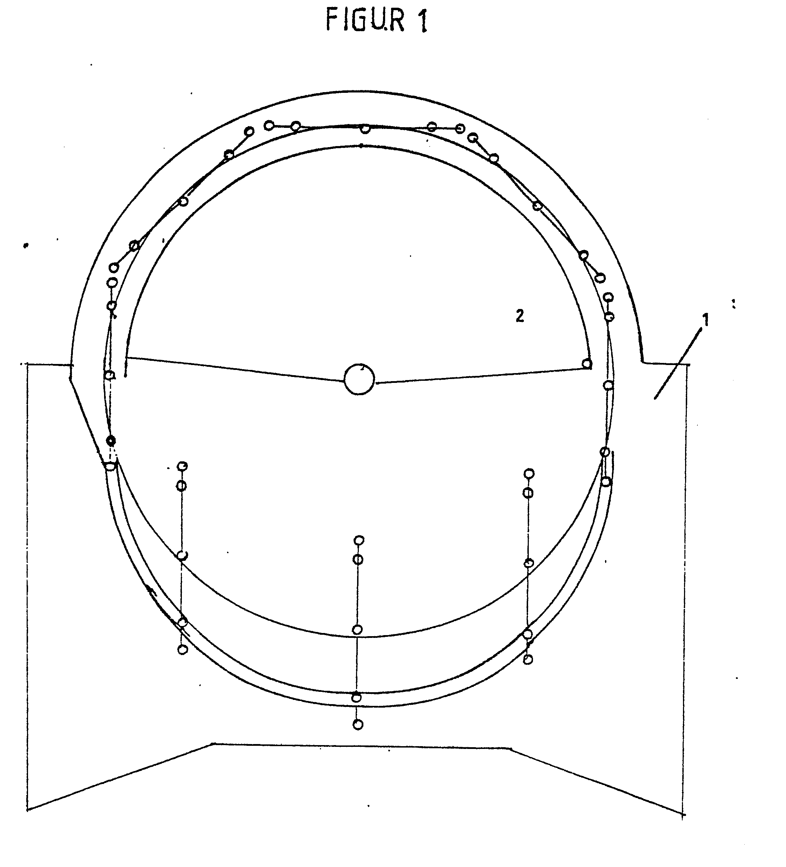

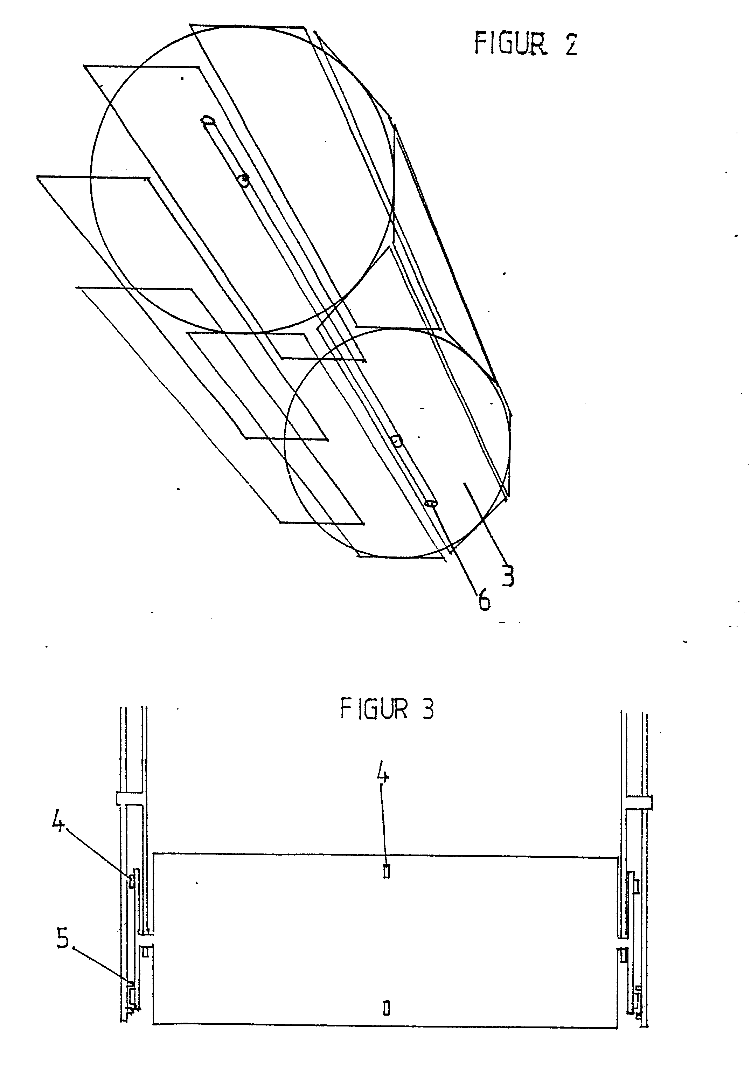

PATENTANSPRUCH


1. Windantrieb, dadurch gekennzeichnet, aufbauend auf Ausnutzung des Windes in der Natur. Durch Umdrehen eines
   Radgehäuses in dem drehbare Lamellen eingebaut sind, die
   sich mit der Drehung des Radgehäuses von der Horizontallage in die Vertikallage drehen und wieder zurück.

FIGUR 1

0104297

- 1/2 -

0104297

-2/2-

FIGUR 2

FIGUR 3

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-C- 742 788 (SACHSENWERK) <br> * Seite 3, Zeile 75 - Schluss der Beschreibung * <br><br> --- | 1 | F 03 D  3/06 |
| X | DE-A-3 000 134 (WAGNER) <br> * Beschreibung * <br><br> ----- | 1 | |

RECHERCHIERTE
SACHGEBIETE (Int. Cl. 3)

F 03 D

Der vorliegende Recherchenbericht wurde für alle Patentansprüche erstellt.

| Recherchenort | Abschlußdatum der Recherche | Prüfer |
|---|---|---|
| DEN HAAG | 20-05-1983 | DE WINTER P.E.F. |